# FASCICULE DE BREVET EUROPEEN

(11) **EP 3 636 472 B1**
(45) Date de publication et mention de la délivrance du brevet: **04.05.2022**
(21) Numéro de dépôt: 19202239.0
(22) Date de dépôt: 09.10.2019
(51) Int. Cl.: B60J 5/04, B60J 5/10

(54) **PANNEAU DE CARROSSERIE COMPORTANT DES ÉLÉMENTS DE RIGIDIFICATION RAPPORTÉS**
KAROSSERIEPANEEL, DAS AUFGEBRACHTE AUSSTEIFUNGSELEMENTE UMFASST
VEHICLE BODY PANEL COMPRISING ADDED STIFFENING ELEMENTS

(30) Priorité: 11.10.2018 FR 1859413
(43) Date de publication de la demande: 15.04.2020
(73) Titulaire: Compagnie Plastic Omnium, 69007 Lyon (FR)
(72) Inventeur: ROZE, Bertrand, 01150 Sainte-Julie (FR); MARTINEZ-ROBBE, Mylène, 01150 Sainte-Julie (FR)
(74) Mandataire: LLR

(56) Documents cités:
- JP-B2- 3 013 921
- US-A1- 2017 174 057
- US-A1- 2018 222 295

## Description

L'invention concerne le domaine des véhicules automobiles et plus particulièrement les panneaux formant les éléments de carrosserie.

De manière plus spécifique, les ouvrants du véhicule sont constitués d'une doublure, formant la partie structurelle, recouverte d'une peau, formant la paroi visible depuis l'extérieur du véhicule.

La doublure comporte un ensemble de raidisseurs, reliés entre eux pour conférer à la doublure et donc plus globalement à l'ouvrant, la rigidité et la résistance aux sollicitations mécaniques attendues.

L'invention s'applique aux panneaux de carrosserie formés d'une doublure recouverte d'une peau, réalisés par moulage d'un matériau plastique ou thermoplastique ou encore d'un matériau composite, comme par exemple un hayon arrière ou une porte latérale de véhicule. Plus généralement, la peau extérieure peut être produite séparément de la doublure et assemblée ultérieurement par collage ou encore, dans les cas plus simples, être moulée d'un seul tenant avec les raidisseurs formant la doublure.

La mise au point de ces panneaux particuliers se fait pendant la phase de conception d'un modèle de véhicule selon un cahier des charges précis fourni par le concepteur du véhicule. Ce cahier des charges renseigne le concepteur du panneau de carrosserie ou de l'ouvrant sur la forme générale du véhicule, sur les points de liaison du panneau ou de l'ouvrant avec le reste du véhicule, sur le niveau de résistance mécanique à respecter, ainsi que sur une multitude d'autres critères comme la masse, les types de motorisation du véhicule, les niveaux d'équipements pouvant être logés, selon les options, dans le panneau de carrosserie ainsi que les fréquences d'excitation susceptibles de solliciter un mode vibratoire propre du panneau.

Cette phase de conception s'achève par la réalisation et la mise au point d'un moule prévu pour produire les doublures destinées à équiper toutes les versions du modèle de véhicule.

On observe toutefois, pendant les phases d'essai sur véhicule des premières pièces prototypes et en particulier pendant les essais au cours desquels on combine les différentes options proposées, que des vibrations inattendues et particulièrement gênantes du panneau surviennent à certaines fréquences d'excitation et pour l'installation de combinaisons d'équipements spécifiques, en particuliers pour les doublures réalisées par moulage d'un matériau thermoplastique, plastique ou composite. Ainsi, à titre d'exemple, pour un ouvrant de type hayon, pour telle version d'un modèle équipé d'une option spécifique, tel qu'un système d'ouverture à vérins motorisés plus lourd, le hayon entre en vibration lorsque le véhicule roule sur un revêtement routier particulier ou lorsque le moteur tourne à un régime donné. Ces événements imprévus peuvent également survenir au cours de la vie du véhicule lorsque des options d'équipement non prévues à l'origine sont proposées pour relancer l'attractivité du véhicule.

La mise en évidence de ces situations intervient à un moment tardif de la mise au point de la doublure structurelle ou de l'ouvrant, et bien souvent à un stade où il n'est pas possible industriellement ou économiquement de concevoir une nouvelle doublure ainsi qu'un nouveau moule spécifique pour cette version particulière du modèle de véhicule.

Le document US2018/0222295 décrit un panneau de carrosserie comprenant des éléments de liaison entre les raidisseurs formant la doublure structurelle. Ces éléments de liaisons comportent à une première extrémité une fourche qui est introduite dans un orifice disposé sur un raidisseur jusqu'à venir en butée sur un épaulement et une seconde extrémité clipsée sur un montant d'un autre raidisseur. Ce dispositif autorise toutefois le déplacement longitudinal de l'élément de liaison et ne permet pas de filtrer de manière efficace les vibrations longitudinales.

L'invention a pour objet un panneau de carrosserie selon la revendication 1 permettant de proposer une solution économique et pratique à mettre en œuvre pour résoudre ce problème.

Le panneau de carrosserie de véhicule selon l'invention est composé d'une paroi extérieure supportée par une doublure structurelle, réalisée par moulage d'un matériau plastique ou composite, comprenant des raidisseurs agencés pour conférer audit panneau de carrosserie une résistance mécanique donnée.

Ce panneau se caractérise en ce qu'un ou plusieurs éléments de liaison rapportés, dont la rigidité est adaptée pour supprimer une réponse vibratoire des raidisseurs, relient par chacune de leurs extrémités des points d'attache distincts disposés sur la doublure, et dans lequel chaque extrémité de l'élément de liaison est insérée dans un logement, disposé sur un raidisseur, pour former avec ledit raidisseur une liaison par encastrement.

Un élément de liaison a pour objet de relier des points d'attache judicieusement choisis, en formant des ponts entre ces points, de manière à créer des moyens de rigidification supplémentaires et optionnels qu'il est possible de rapporter et d'insérer à la demande sur les modèles d'une même gamme de véhicule présentant les anomalies vibratoires évoquées ci-dessus.

La doublure prévoit donc dès sa conception des logements spécifiques formant des points d'attache destinés à recevoir en cas de besoin un ou plusieurs éléments de liaison adaptés et destinés à recevoir chacune des extrémités des éléments de liaison.

L'élément de liaison relie les deux raidisseurs en formant des liaisons par encastrement. La liaison entre le raidisseur et l'élément de liaison est donc privée de tout degré de liberté, de sorte que les modes vibratoires selon une direction longitudinale de l'élément de liaison sont filtrés efficacement.

L'élément de liaison est rigide et sa rigidité est adaptée pour filtrer et pour supprimer les réponses vibratoires des raidisseurs.

Les parois latérales du logement sont en contact permanent avec les parois latérales de l'extrémité de l'élément de liaison et comprennent des excroissances destinées à collaborer avec un étranglement disposé à l'extrémité de l'élément de liaison et sont agencées de manière à interdire la sortie du logement de l'élément de liaison selon une direction longitudinale de l'élément de liaison de sorte que la forme du logement est complémentaire de la forme de l'extrémité de l'élément de liaison.

Le panneau de carrosserie selon l'invention peut comprendre isolément, ou en combinaison, les caractéristiques suivantes :
- Au moins un élément de liaison relie au moins deux raidisseurs distincts de la doublure (2).
- Au moins un élément de liaison est relié par une de ses extrémités à un point d'attache disposé sur un équipement fixé sur la doublure.
- Une extrémité de l'élément de liaison est retenue dans le logement par un emboitage en force ou par un moyen de fixation tel qu'un film de colle, une vis ou une soudure.
- Les éléments de liaison ont une forme générale linéaire.
- Les extrémités des éléments de liaison et les logements comprennent des moyens de détrompage, associés deux à deux, pour interdire les erreurs d'insertion.
- Les raidisseurs sont formés d'une semelle et d'au moins un voile latéral.
- Les logements sont disposés sur les semelles ou sur les flancs des voiles latéraux des raidisseurs.
- Au moins un élément de liaison est disposé sur la partie de la doublure située du côté intérieur du véhicule.
- Au moins un élément de liaison est disposé sur la partie de la doublure située du côté extérieur du véhicule.
- L'élément de liaison est réalisé par moulage d'un matériau composite ou thermoplastique.
- L'élément de liaison comprend une partie métallique insérée dans une matrice thermoplastique.

L'invention concerne également un panneau de carrosserie présentant une ou plusieurs des caractéristiques énoncées ci-dessus et formant un ouvrant de véhicule, et plus particulièrement, un hayon arrière ou une porte latérale.

### Brève description des figures

L'invention sera mieux comprise à la lecture des figures annexées, qui sont fournies à titre d'exemples et ne présentent aucun caractère limitatif, dans lesquelles :
- La figure 1 est une vue d'un hayon vu de l'intérieur du véhicule comportant des éléments de liaison selon l'invention.
- La figure 2 est une vue en perspective de la doublure comportant des points d'attache formant des logements destinés à recevoir des éléments de liaison.
- La figure 3 est une vue en perspective de la doublure dans laquelle des éléments de liaison sont insérés dans les logements.
- La figure 4 représente une vue d'un hayon comportant des éléments de liaison formés de plusieurs branches.
- La figure 5 représente une vue d'un hayon dans lequel les éléments de liaison sont attachés à un équipement monté sur la doublure.
- La figure 6 représente des vues selon trois faces distinctes d'un élément de liaison particulier.
- La figure 7 est une vue détaillée en perspective d'une extrémité d'élément de liaison.
- La figure 8 est une vue en perspective illustrant un montage particulier d'un élément de liaison entre deux raidisseurs de la doublure.
- Les figures 9 à 13 illustrent des variantes de fixation d'un élément de liaison dans un logement.

### Description détaillée

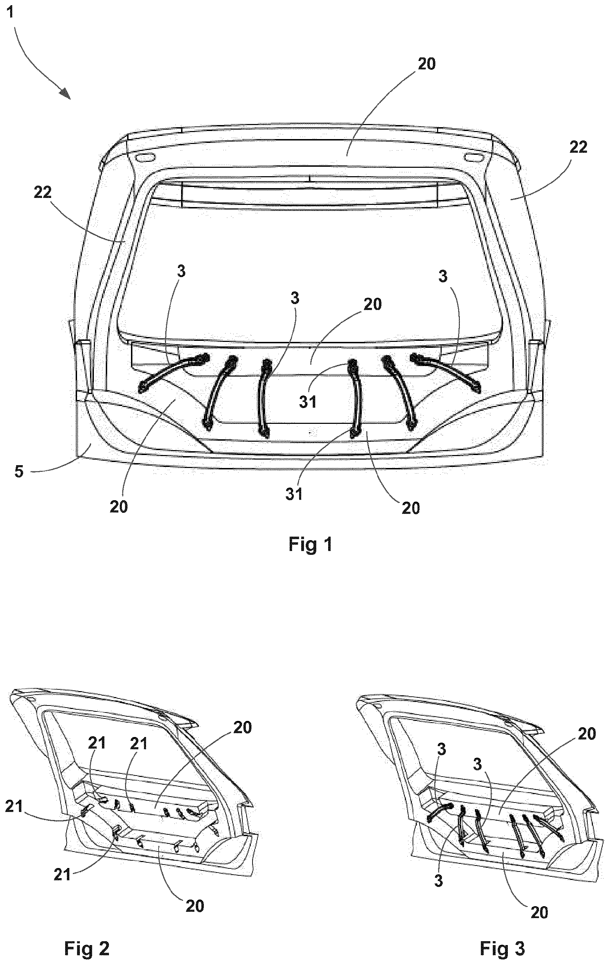

La figure 1 représente une doublure structurelle 2 d'un hayon arrière 1 de véhicule comprenant des raidisseurs 20, dont la rigidité d'ensemble confère au hayon la résistance mécanique requise par le cahier des charges de conception du véhicule. Ces raidisseurs 20 suivent par exemple les bords du hayon et forment alors un cadre structurel du bord externe du hayon supportant la peau 5 visible depuis l'extérieur du véhicule, ou constituent un cadre structurel entourant l'ouverture de la lunette.

Des raidisseurs 22 forment les montants latéraux du hayon sur lesquels, ou à l'intérieur desquels, sont disposés les vérins d'ouverture, les bords latéraux de la vitre arrière, des câbles électriques ou encore des dispositifs lumineux ou électroniques constituant une partie des équipements annexes du hayon.

La doublure et notamment les raidisseurs situés sur le bord extérieur servent de support de fixation des charnières ou de la serrure.

Préférentiellement, la doublure du hayon, et plus généralement la doublure du panneau de carrosserie, est formée par moulage d'un matériau thermoplastique tel que, à titre d'exemple, du polypropylène chargé de talc.

Des éléments de liaison 3 relient par leurs deux extrémités 31 deux raidisseurs distincts de la doublure structurelle 2.

Les éléments de liaison 3 définissent avec les points d'attache disposés sur la doublure des liaisons de type encastrement, sans degrés de liberté en translation ou en rotation, de manière à apporter la rigidité supplémentaire requise pour supprimer une réponse modale vibratoire des raidisseurs à une fréquence propre d'excitation. Les éléments de liaison permettent ainsi de bloquer le déplacement relatif de deux raidisseurs.

La figure 2 illustre le hayon tel qu'il se présente à l'issue de l'opération de l'étape de moulage, en l'absence d'éléments de liaison 3.

Des logements 21, faisant office de point d'attache, sont pratiqués à titre prévisionnel en divers points prédéterminés des raidisseurs 20. Ces logements 21 ont une forme adaptée pour recevoir les extrémités 31 des éléments de liaison 3 comme cela est illustré à la figure 3.

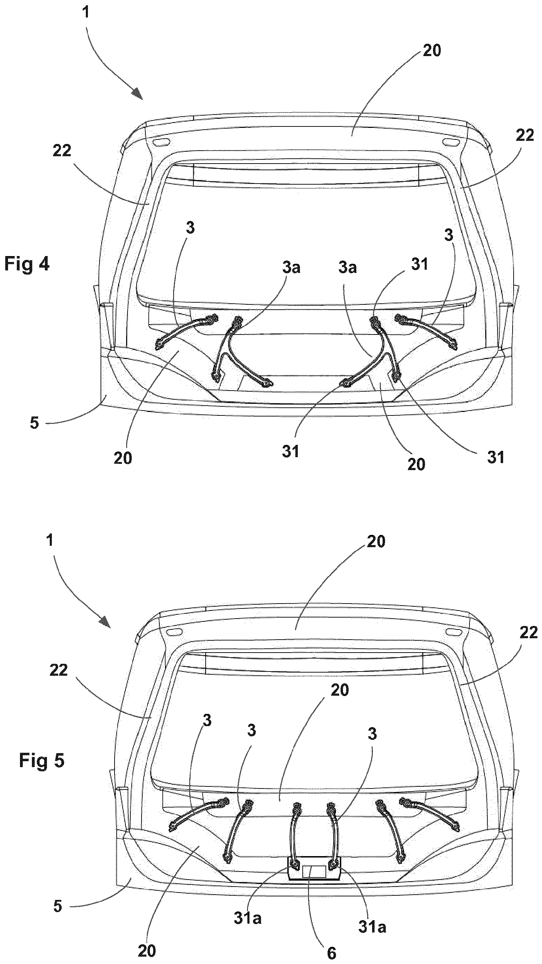

On observera ici que les éléments de liaison représentés sur la figure 1 ne comportent que deux extrémités. Toutefois, l'invention n'exclut pas le cas dans lequel l'élément de liaison 3a comporte plusieurs branches et donc plus de deux extrémités, comme cela est illustré à la figure 4.

En variante de réalisation de l'invention, il est également possible de fixer une des extrémités d'un élément de liaison sur un équipement lui-même monté sur la peau de la pièce de carrosserie ou, préférentiellement, sur un équipement monté solidement sur la doublure tel que, à titre d'exemple le moteur d'essuie-glace, ou la serrure 6 d'un ouvrant comme cela est illustré à la figure 5. Dans ce cas, il convient alors de prévoir des points d'attache 31a adaptés sur les équipements en question.

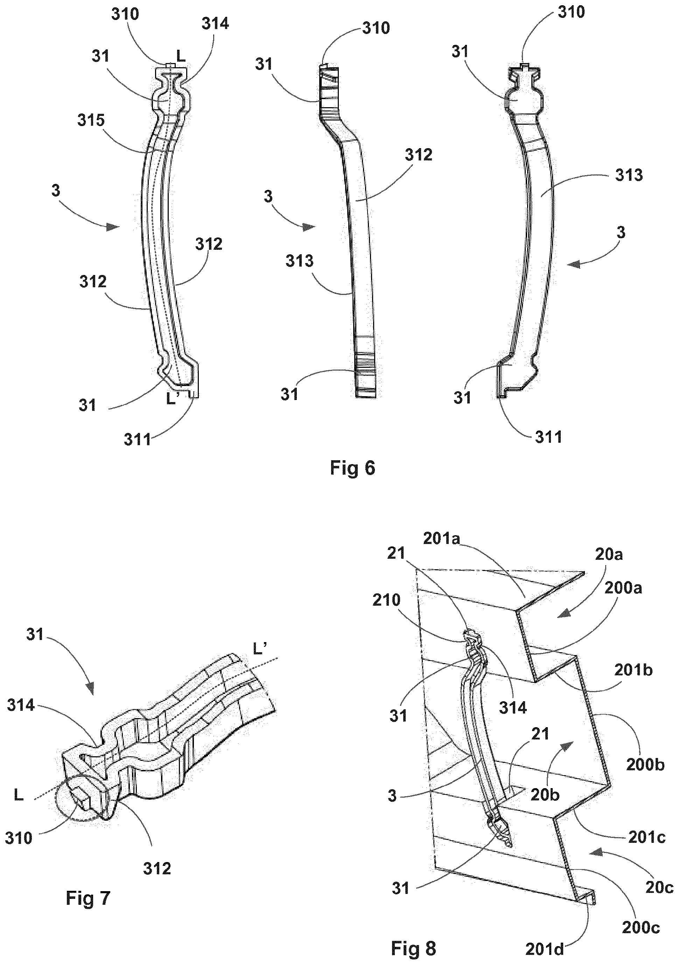

La figure 6 illustre un élément de liaison 3 vu depuis sa face avant, sa face latérale et sa face arrière.

L'élément de liaison 3 présente une forme générale allongée. On entend ici par forme générale allongée un élément de liaison dont la racine carrée de la surface d'une section droite 315 quelconque est très inférieure à la longueur de la fibre neutre représentée ici par la ligne en pointillée LL'. La forme de l'élément de liaison 3, et de la ligne LL' (en pointillés sur la figure 6), est conçue pour relier entre eux deux raidisseurs, tout en préservant l'espace nécessaire au logement des équipements annexes évoqués ci-dessus.

L'élément de liaison 3 illustré aux figures 6 et 7 et servant de support à la présente description se présente sous la forme d'une poutre sensiblement rigide comprenant une semelle 313 bordée de deux parois latérales 312. L'élément de liaison 3 comprend deux extrémités 31, dont la forme est adaptée pour être insérée par encastrement dans un logement 21 disposé sur un raidisseur 20. La rigidité de l'élément de liaison peut être adaptée en fonction du résultat recherché.

Pour se prémunir des erreurs d'insertion, les extrémités 31 de l'élément de liaison peuvent avoir une forme particulière adaptée à la forme du logement dans lequel elle est destinée à être insérée, à la manière de deux pièces de puzzle, ou encore comporter des détrompeurs 310, 311 disposés judicieusement pour venir se placer dans une découpe spécifique pratiquée dans le logement 21.

Les parois latérales 312 d'une extrémité 31 forment également un étranglement 314 destiné à collaborer avec des excroissances 210 (voir figure 8) disposées dans le logement 21, et agencées de manière à interdire la sortie du logement de l'élément de liaison 3 selon la direction longitudinale LL' de l'élément de liaison.

La figure 8 permet de détailler, à titre d'exemple, le montage de l'élément de liaison entre deux raidisseurs 20a et 20c. Chacun des raidisseurs comporte une semelle, respectivement 200a et 200c, reliée par ses deux lisières latérales à des parois, respectivement 201a, 201b et 201c, 201d, faisant office de voile latéral. La partie concave des raidisseurs 20a et 20c est orientée ici du côté extérieur du véhicule. Ce mode réalisation particulier des raidisseurs n'exclut pas le cas, plus simple, dans lequel les raidisseurs ne comportent qu'un seul voile.

Les éléments de liaison 3 relient les semelles des deux raidisseurs 20a et 20c.

On observera que les cloisons 201b et 201c sont elles-mêmes reliées entre elles par une semelle 200b et forment ensemble un raidisseur 20b dont la concavité est orientée côté intérieur véhicule. Le raidisseur 20b peut également comporter un ou plusieurs logements pour être relié, si nécessaire, par un ou plusieurs éléments de liaison avec un raidisseur adjacent (non représenté).

De manière alternative, les logements peuvent également être disposés sur les flancs des voiles latéraux.

Il résulte de ces observations que les éléments de liaison peuvent tout aussi bien être disposés, selon les besoins, côté intérieur véhicule ou côté extérieur véhicule.

L'élément de liaison 3 est réalisé préférentiellement par moulage d'un matériau thermoplastique, ou en toute autre matière susceptible de lui conférer la résistance et la rigidité requise pour réduire les vibrations de la doublure. A cet effet, et lorsque cela parait nécessaire, il est également possible de réaliser un élément de liaison hybride comprenant une partie métallique insérée dans une matrice thermoplastique.

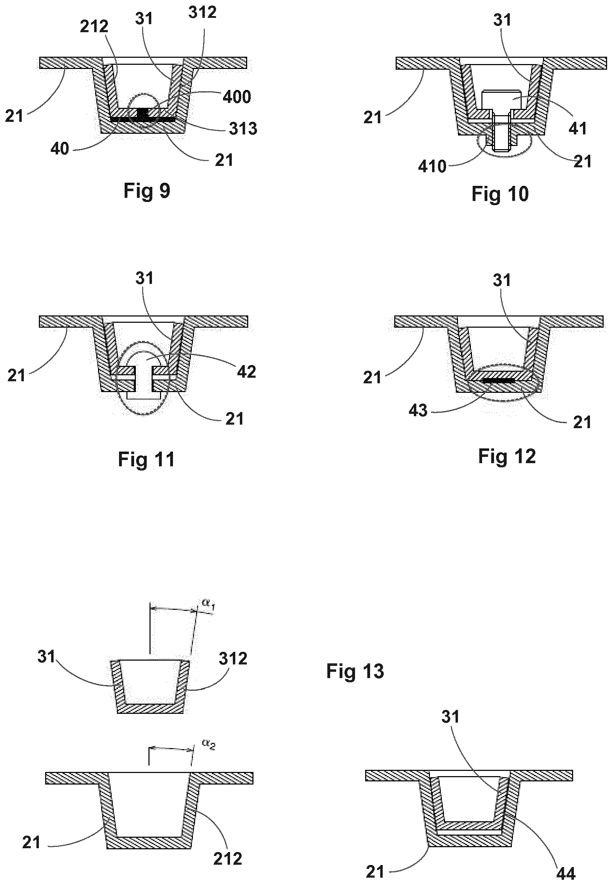

Les figures 9 à 13 illustrent les modes préférentiels de fixation par encastrement d'une extrémité 31 dans un logement 21. Il importe en effet que l'élément de liaison 3, une fois inséré par ses deux extrémités dans les logements aménagés dans deux raidisseurs distincts ne se désolidarise pas de manière inopportune.

Aussi, on s'arrangera pour que, au niveau des extrémités 31, les formes des parois latérales 312 de l'élément de liaison 3 soient en contact permanent avec les parois latérales 212 du logement 21,de sorte que la forme du logement est complémentaire de la forme de l'extrémité de l'élément de liaison.

La figure 9 illustre le cas dans lequel l'extrémité 31 est fixée dans un logement 21 par un film de colle 40. Pour s'assurer d'une épaisseur de colle constante il est avantageux de pratiquer des exutoires 400 dans la semelle 313 de l'élément de liaison 3.

La figure 10 illustre le cas dans lequel l'extrémité 31 est fixée dans le logement 21 par une vis 41 venant s'insérer dans un renflement 410 disposé sur le fond du logement 21. On pourra utilement employer une vis en plastique auto-taraudeuse.

Le mode de fixation par rivet 42 est représenté à la figure 11.

La figure 12 illustre le cas dans lequel l'extrémité 31 est rendue solidaire du logement par une soudure 43, de préférence par ultrason.

Enfin, la figure 13 illustre le cas dans lequel l'extrémité 31 est emboîtée en force 44 dans le logement 21. A cet effet, les parois latérales 312 présentent une inclinaison α₁ légèrement supérieure à l'inclinaison α₂ des parois latérales 212 du logement 21. On pourra utilement améliorer la résistance de ce type d'emboîtement en pratiquant de légères aspérités sur les parois latérale 312 de l'extrémité 31 et sur les parois latérales 212 du logement 31.

D'autres modes de fixation, tels qu'une fixation par agrafage ou par clipsage peuvent également être envisagée.

Tous ces modes de fixation, qui peuvent éventuellement être combinés deux à deux, permettent d'introduire, et si nécessaire d'extraire, à la demande, les éléments de liaison 3 pour ajuster la réponse modale en vibration de la doublure.

Bien évidemment, toutes les dispositions évoquées dans la description ci-dessus s'appliquent mutatis mutandis à une porte latérale.

### NOMENCLATURE

- 1: Panneau de carrosserie/hayon.
- 2: Doublure structurelle.
- 20, 20a, 20b, 20c: Raidisseurs.
- 22: Montant.
- 200, 200a, 200b, 200c: Semelle.
- 201, 201a, 201b, 201c, 201d: Voile latéral.
- 21: Point d'attache, Logement.
- 210: Excroissance.
- 212: Parois latérales du logement.
- 3: Elément de liaison.
- 3a: Elément de liaison.
- 31: Extrémité d'un élément de liaison.
- 310,311: Détrompeurs.
- 312: Parois latérales de l'élément de liaison.
- 313: Semelle de l'élément de liaison.
- 314: Etranglement.
- 315: Section droite.
- 40: Colle.
- 400: Exutoire.
- 41: Vis.
- 410: Renflement.
- 42: Rivet.
- 43: Soudure.
- 44: Emboîtement en force.
- 5: Peau extérieure.
- 6: Serrure du hayon

## Revendications

1. Panneau de carrosserie (1) de véhicule, composé d'une paroi extérieure (5) supportée par une doublure (2) structurelle, réalisée par moulage d'un matériau plastique ou composite, comprenant des raidisseurs (20, 20a, 20b, 20c) agencés pour conférer audit panneau de carrosserie une résistance mécanique donnée, où un ou plusieurs éléments de liaison (3) rapportés, dont la rigidité est adaptée pour supprimer une réponse vibratoire des raidisseurs (20, 20a, 20b), relient par chacune de leurs extrémités (31) des points d'attache (21) distincts disposés sur la doublure, et dans lequel chaque extrémité (31) de l'élément de liaison est insérée dans un logement, disposé sur un raidisseur (20, 20a, 20b), pour former avec ledit raidisseur une liaison par encastrement, **caractérisé en ce que** les parois latérales (212) du logement (21) sont en contact permanent avec les parois latérales (312) de l'extrémité (31) de l'élément de liaison (3) et comprennent des excroissances (210) destinées à collaborer avec un étranglement (314) disposé à l'extrémité de l'élément de liaison (3) et sont agencées de manière à interdire la sortie du logement (21) de l'élément de liaison (3) selon une direction longitudinale (L-L') de l'élément de liaison (3), de sorte que la forme du logement (21) est complémentaire de la forme de l'extrémité (31) de l'élément de liaison (3).

2. Panneau de carrosserie selon la revendication 1, dans lequel au moins un élément de liaison relie au moins deux raidisseurs distincts de la doublure (2).

3. Panneau de carrosserie selon l'une quelconque des revendications précédentes, dans lequel au moins un élément de liaison est relié par une de ses extrémités à un point d'attache disposé sur un équipement (6) fixé sur la doublure (2).

4. Panneau de carrosserie (1) selon l'une quelconque des revendications précédentes, dans lequel une extrémité (31) de l'élément de liaison (3) est retenue dans le logement (21) par un emboitage en force ou par un moyen de fixation tel qu'un film de colle (40), une vis (41) ou une soudure (43).

5. Panneau de carrosserie (1) selon l'une quelconque des revendications précédentes, dans lequel les éléments de liaison (3) ont une forme générale linéaire.

6. Panneau de carrosserie (1) selon l'une quelconque des revendications précédentes, dans lequel les extrémités (31) des éléments de liaison (3) et les logements (21) comprennent des moyens de détrompage (310, 311), associés deux à deux, pour interdire les erreurs d'insertion.

7. Panneau de carrosserie (1) selon l'une quelconque des revendications précédentes, dans lequel les raidisseurs (20, 20a, 20b, 20c) sont formés d'une semelle (200, 200a, 200b, 200c) et d'au moins un voile latéral (201, 201a, 201b, 201c, 201d).

8. Panneau de carrosserie (1) selon la revendication 7, dans lequel les logements (21) sont disposés sur les semelles (200, 200a, 200b, 200c) ou sur les flancs des voiles latéraux (201, 201a, 201b, 201c, 201d) des raidisseurs (20, 20a, 20b, 20c).

9. Panneau de carrosserie (1) selon l'une quelconque des revendications 1 à 8, dans lequel au moins un élément de liaison (3) est disposé sur la partie de la doublure (2) située du côté intérieur du véhicule.

10. Panneau de carrosserie (1) selon l'une quelconque des revendications 1 à 9, dans lequel au moins un élément de liaison (3) est disposé sur la partie de la doublure située du côté extérieur du véhicule.

11. Panneau de carrosserie (1) selon l'une quelconque des revendications 1 à 10, dans lequel l'élément de liaison (3) est réalisé par moulage d'un matériau composite ou thermoplastique.

12. Panneau de carrosserie (1) selon l'une quelconque des revendications 1 à 11, dans lequel l'élément de liaison (3) comprend une partie métallique insérée dans une matrice thermoplastique.

13. Panneau de carrosserie (1) selon l'une quelconque des revendications précédentes formant un ouvrant de véhicule.

14. Panneau de carrosserie (1) selon la revendication 13, formant un hayon arrière ou une porte latérale.

## Patentansprüche

1. Karosseriepaneel (1) eines Fahrzeugs, bestehend aus einer Außenwand (5), die von einer strukturellen Auskleidung (2) getragen wird, die durch Formen eines Kunststoff- oder Verbundmaterials hergestellt wird und Aussteifungselemente (20, 20a, 20b, 20c) aufweist, die so angeordnet sind, dass sie dem Karosseriepaneel eine gegebene mechanische Festigkeit verleihen, wobei ein oder mehrere angebrachte Verbindungselemente (3), deren Steifigkeit angepasst ist, um eine Vibrationsantwort der Aussteifungselemente (20, 20a, 20b) zu unterdrücken, mit jedem ihrer Enden (31) getrennte Befestigungspunkte (21) verbinden, die auf der Auskleidung angeordnet sind, und wobei jedes Ende (31) des Verbindungselements in eine Aufnahme eingeführt ist, die auf einem Aussteifungselement (20, 20a, 20b) angeordnet ist, um mit dem Aussteifungselement eine Einsteckverbindung zu bilden, **dadurch gekennzeichnet, dass** die Seitenwände (212) der Aufnahme (21) in ständigem Kontakt mit den Seitenwänden (312) des Endes (31) des Verbindungselements (3) stehen und Vorsprünge (210) aufweisen, die dazu bestimmt sind, mit einer am Ende des Verbindungselements (3) angeordneten Verengung (314) zusammenzuwirken, und so angeordnet sind, dass sie den Austritt des Verbindungselements (3) aus der Aufnahme (21) in einer Längsrichtung (LL') des Verbindungselements (3) verhindern, so dass die Form der Aufnahme (21) komplementär zur Form des Endes (31) des Verbindungselements (3) ist.

2. Karosseriepaneel nach Anspruch 1, wobei mindestens ein Verbindungselement mindestens zwei getrennte Aussteifungselemente der Auskleidung (2) miteinander verbindet.

3. Karosseriepaneel nach einem der vorhergehenden Ansprüche, wobei mindestens ein Verbindungselement an einem seiner Enden mit einem Befestigungspunkt verbunden ist, der an einer Ausrüstung (6) angeordnet ist, die an der Auskleidung (2) befestigt ist.

4. Karosseriepaneel (1) nach einem der vorhergehenden Ansprüche, wobei ein Ende (31) des Verbindungselements (3) in der Aufnahme (21) durch ein kraftschlüssiges Zusammenstecken oder durch ein Befestigungsmittel wie einen Klebstofffilm (40), eine Schraube (41) oder eine Schweißnaht (43) gehalten wird.

5. Karosseriepaneel (1) nach einem der vorhergehenden Ansprüche, wobei die Verbindungselemente (3) eine allgemein lineare Form haben.

6. Karosseriepaneel (1) nach einem der vorhergehenden Ansprüche, wobei die Enden (31) der Verbindungselemente (3) und die Aufnahmen (21) paarweise zugeordnete Kodierungsmittel (310, 311) aufweisen, um Fehler beim Einsetzen zu vermeiden.

7. Karosseriepaneel (1) nach einem der vorhergehenden Ansprüche, wobei die Aussteifungselemente (20, 20a, 20b, 20c) aus einer Grundseite (200, 200a, 200b, 200c) und mindestens einer Seitenwand (201, 201a, 201b, 201c, 201d) gebildet sind.

8. Karosseriepaneel (1) nach Anspruch 7, wobei die Aufnahmen (21) an den Grundseiten (200, 200a, 200b, 200c) oder an den Flanken der Seitenwände (201, 201a, 201b, 201c, 201d) der Aussteifungselemente (20, 20a, 20b, 20c) angeordnet sind.

9. Karosseriepaneel (1) nach einem der Ansprüche 1 bis 8, wobei mindestens ein Verbindungselement (3) an dem Teil der Auskleidung (2) angeordnet ist, der sich auf der Innenseite des Fahrzeugs befindet.

10. Karosseriepaneel (1) nach einem der Ansprüche 1 bis 9, wobei mindestens ein Verbindungselement (3) an dem Teil der Auskleidung angeordnet ist, der sich auf der Außenseite des Fahrzeugs befindet.

11. Karosseriepaneel (1) nach einem der Ansprüche 1 bis 10, wobei das Verbindungselement (3) durch Formen eines Verbundwerkstoffs oder thermoplastischen Materials hergestellt wird.

12. Karosseriepaneel (1) nach einem der Ansprüche 1 bis 11, wobei das Verbindungselement (3) einen Metallteil aufweist, der in eine thermoplastische Matrix eingefügt ist.

13. Karosseriepaneel (1) nach einem der vorhergehenden Ansprüche, das eine Fahrzeugöffnung bildet.

14. Karosseriepaneel (1) nach Anspruch 13, das eine Heckklappe oder eine Seitentür bildet.

## Claims

1. Vehicle body panel (1), consisting of an outer wall (5) supported by a structural lining (2), made by molding a plastic or composite material, comprising stiffeners (20, 20a, 20b, 20c) arranged to give said body panel a given mechanical strength, **where** one or more connecting elements (3) reported, whose rigidity is adapted to suppress a vibration response of stiffeners (20, 20a, 20b), connect by each of their ends (31) distinct attachment points (21) arranged on the lining, and in which each end (31) of the connecting element is inserted into a housing, arranged on a stiffener (20, 20a, 20b), to form with said stiffener a recessed bond, **characterized in that** the side walls (212) of the housing (21) are in permanent contact with the side walls (312) of the end (31) of the connecting element (3) and include growths (210) intended to collaborate with a choke (314) arranged at the end of the connecting element (3) and are arranged in such a way as to prevent the exit from the housing (21) of the connecting element (3) in a longitudinal direction (LL') of the connecting element (3), so that the shape of the housing (21) is complementary to the shape of the end (31) of the connecting element (3).

2. Body panel according to claim 1, wherein at least one connecting element connects at least two separate stiffeners of the lining (2).

3. Body panel according to any one of the preceding claims, wherein at least one connecting element is connected by one of its ends to an attachment point arranged on equipment (6) fixed on the lining (2).

4. Body panel (1) according to any one of the preceding claims, wherein one end (31) of the connecting element (3) is retained in the housing (21) by a force casing or by a means of fixing such as a glue film (40), a screw (41) or a weld (43).

5. Body panel (1) according to any one of the preceding claims, wherein the connecting elements (3) have a general linear shape.

6. Body panel (1) according to any one of the preceding claims, wherein the ends (31) of the connecting elements (3) and the housings (21) comprise means of de-trimming (310, 311), associated two by two, to prohibit insertion errors.

7. Body panel (1) according to any one of the preceding claims, wherein the stiffeners (20, 20a, 20b, 20c) are formed of a sole (200, 200a, 200b, 200c) and at least one side sail (201, 201a, 201b, 201c, 201d).

8. Body panel (1) according to claim 7, wherein the housings (21) are arranged on the soles (200, 200a, 200b, 200c) or on the sides of the side sails (201, 201a, 201b, 201c, 201d) of the stiffeners (20, 20a, 20b, 20c).

9. Body panel (1) according to any one of claims 1 to 8, wherein at least one connecting element (3) is arranged on the part of the lining (2) located on the inner side of the vehicle.

10. Body panel (1) according to any one of claims 1 to 9, wherein at least one connecting element (3) is arranged on the part of the lining located on the outer side of the vehicle.

11. Body panel (1) according to any one of claims 1 to 10, wherein the bonding element (3) is made by molding a composite or thermoplastic material.

12. Body panel (1) according to any one of claims 1 to 11, wherein the connecting element (3) comprises a metal part inserted into a thermoplastic matrix.

13. Body panel (1) according to any one of the preceding claims forming a vehicle opening.

14. Body panel (1) according to claim 13, forming a rear tailgate or a side door.
